# EUROPÄISCHE PATENTSCHRIFT

(11) **EP 4 045 359 B1**
(45) Veröffentlichungstag und Bekanntmachung des Hinweises auf die Patenterteilung: **05.04.2023**
(21) Anmeldenummer: 20833742.8
(22) Anmeldetag: 11.12.2020
(51) Int. Cl.: B60Q 1/04, G06K 9/00, B60G 17/00, G06V 10/141, G06V 20/58, B60G 17/0165

(54) **VERFAHREN ZUR BELEUCHTUNG EINES FAHRZEUGUMFELDES UND KRAFTFAHRZEUG**
METHOD FOR ILLUMINATING VEHICLE SURROUNDINGS, AND MOTOR VEHICLE
PROCÉDÉ PERMETTANT D'ÉCLAIRER L'ENVIRONNEMENT DE VÉHICULE ET VÉHICULE À MOTEUR

(30) Priorität: 24.01.2020 DE 102020101710
(43) Veröffentlichungstag der Anmeldung: 24.08.2022
(73) Patentinhaber: Audi AG, 85045 Ingolstadt (DE)
(72) Erfinder: SCHMIDT, Valentin, 86633 Neuburg a.d. Donau (DE); ARMBRUSTER, Tilman, 85057 Ingolstadt (DE); REIM, Johannes, 85072 Eichstätt (DE); DEBELEC, Marcel, 85053 Ingolstadt (DE)
(74) Vertreter: Lindner Blaumeier Patent- und Rechtsanwälte
(86) Internationale Anmeldenummer: PCT/EP2020/085691
(87) Internationale Veröffentlichungsnummer: WO 2021/148196

(56) Entgegenhaltungen:
- EP-A1- 3 100 908
- EP-A1- 3 398 812
- CN-A- 102 923 215
- DE-A1- 4 401 541
- DE-A1-102014 221 647
- DE-A1-102015 200 748
- DE-A1-102017 119 376

## Beschreibung

Die Erfindung betrifft ein Verfahren zur Beleuchtung eines Fahrzeugumfeldes eines Kraftfahrzeugs, das eine Beleuchtungseinrichtung und eine Erfassungseinrichtung umfasst, wobei die Beleuchtungseinrichtung dazu eingerichtet ist, einen Raumwinkelbereich des Fahrzeugumfelds mit verschiedenen Beleuchtungsmustern, insbesondere mit sichtbarem Licht, zumindest teilweise auszuleuchten, wobei die Beleuchtungsmuster jeweils Beleuchtungsintensitäten für verschiedene Teilraumwinkelbereiche des Raumwinkelbereichs vorgeben, umfassend die Schritte:
- Beleuchten des Fahrzeugumfelds mit einem ersten der Beleuchtungsmuster durch die Beleuchtungseinrichtung,
- Erfassen eines Lichtmusters, das aus der Beleuchtung des Fahrzeugumfeldes mit dem ersten Beleuchtungsmuster resultiert, durch die Erfassungseinrichtung,
- Auswahl eines zweiten der Beleuchtungsmuster in Abhängigkeit des erfassten Lichtmusters, und
- Beleuchten des Fahrzeugumfeldes mit dem zweiten Beleuchtungsmuster durch die Beleuchtungseinrichtung,
   wobei in Abhängigkeit des erfassten Lichtmusters
- erkannt wird, ob sich in dem Raumwinkelbereich eine Unebenheit und/oder ein Hindernis befindet und/oder
- einer erkannten Unebenheit und/oder einem erkannten Hindernis durch eine Klassifikationsalgorithmus eine Klasse zugewiesen wird und/oder
- eine Position der erkannten Unebenheit und/oder des erkannten Hindernisses ermittelt wird,
wobei die Auswahl des zweiten Beleuchtungsmusters von der Klasse und/oder der Position und/oder davon abhängt, ob sich eine Unebenheit und/oder ein Hindernis in dem Raumwinkelbereich befindet. Daneben betrifft die Erfindung ein Kraftfahrzeug.

Bei Fahrten in unwegigem Gelände können auf dem Fahrweg Unebenheiten beziehungsweise Hindernisse auftreten, die nicht oder nur mit großer Vorsicht überfahren werden sollten. Insbesondere bei Dunkelheit können entsprechende Hindernisse bei einer üblichen Beleuchtung durch Abblendlicht durch einen Fahrer kaum wahrgenommen werden.

Im Stand der Technik sind verschiedene Ansätze bekannt, Lichtmuster in einem Fahrzeugumfeld zu projizieren und anhand von Verzerrungen des projizierten Lichtmusters Unebenheiten für einen Fahrer hervorzuheben beziehungsweise automatisiert durch das Kraftfahrzeug zu erkennen. Entsprechende Ansätze werden beispielsweise in den Druckschriften DE 10 2015 206 936 A1, DE 197 30 414 A1 und WO 2019/121880 A1 diskutiert. Problematisch ist hierbei, dass für ein komfortables Erkennen von Unebenheiten durch Beobachtung eines verzerrten Lichtmusters durch einen Fahrer selbst und für ein automatisches Erkennen von Unebenheiten deutlich unterschiedliche Anforderungen resultieren. Um Unebenheiten im Fahrzeugumfeld möglichst gut automatisch erkennen zu können, sollte eine Beleuchtung mit einem sehr feinen Muster erfolgen. Die flächige Beleuchtung des Fahrzeugvorfelds mit einem sehr feinen Muster wird von Fahrern jedoch häufig als eher störend empfunden und erschwert zudem die Erkennung von Verzerrungen des projizierten Musters beziehungsweise Gitters durch den Fahrer selbst.

Daher wird im Stand der Technik zur automatisierten Hinderniserkennung durch Lichtprojektion häufig vorgeschlagen, Infrarotlicht zu verwenden. Dies kann jedoch ausschließlich zur automatischen Hinderniserkennung dienen, da eine solche Beleuchtung für einen Fahrer nicht sichtbar ist. Zudem ist eine zusätzliche Beleuchtungseinrichtung erforderlich, wodurch der technische Aufwand zur Umsetzung solcher Ansätze höher sein kann als bei der Nutzung von sichtbarem Licht.

Aus der Druckschrift EP 3 100 908 A1 ist es bekannt, eine abgestrahlte Lichtverteilung in Abhängigkeit davon zu steuern, ob und an welcher Position sich ein Hindernis im Kraftfahrzeugvorfeld befindet. Zur Objekterkennung werden Bilddaten einer Kamera genutzt, die im Rahmen einer Mustererkennung mit Bilddaten einer Vorlage verglichen werden.

In der Lehre der Druckschrift EP 3 398 812 A1 wird ein gleichmäßiges Lichtmuster abgestrahlt. Trifft dieses auf ein Hindernis, resultiert eine Diskontinuität des Lichtmusters, durch die ein Fahrer auf das Vorhandensein dieses Hindernisses hingewiesen wird. Es ist möglich, ein solches Lichtmuster nur dann abzustrahlen, wenn ein entsprechendes Objekt im Fahrzeugvorfeld erkannt wird.

In dem Fahrzeugscheinwerfersystem mit adaptiver Lichtverteilung gemäß der Druckschrift DE 10 2014 221 647 A1 werden in Kamerabildern erkannte Objekte markiert, indem durch das Scheinwerfersystem ein rahmenförmiger Bereich um diese Objekte mit einer Beleuchtungsstärke beleuchtet wird, die wesentlich kleiner ist als die Beleuchtungsstärke für das Objekt selbst.

In dem Verfahren zur Ansteuerung mindestens einer Fahrzeugkomponente gemäß der Druckschrift DE 10 2017 119 376 A1 wird eine Leuchteinheit zur Aussendung eines Streifenmusters angesteuert und eine Fahrzeugkamera erfasst ein Bild von der mittels des Streifenmusters beleuchteten Fahrbahn. Störungen einzelner Lichtstreifen, also eine Unterbrechung oder Umlenkung, die aus Fahrbahnunebenheiten resultieren können, werden erkannt und für die Ansteuerung des Fahrwerks verwendet.

Der Erfindung liegt somit die Aufgabe zugrunde, ein Fahrzeugumfeld auf eine Weise zu beleuchten, die einerseits eine für einen Fahrer komfortable Erkennung des Umfelds, insbesondere von Hindernissen und Unebenheiten, ermöglicht und andererseits eine automatisierte Erkennung von Hindernissen und Unebenheiten im Fahrzeugumfeld unterstützt.

Die Aufgabe wird erfindungsgemäß durch ein Verfahren der eingangs genannten Art gelöst, wobei in Abhängigkeit des ersten Beleuchtungsmusters und des erfassten Lichtmusters für Abschnitte einer in dem Raumwinkelbereich befindlichen Fahrebene jeweils Höheninformationen ermittelt werden, und somit aus dem erfassten Lichtmuster einen Höhenverlauf der Fahrebene extrahiert wird, wobei die Erkennung und/oder Klassifikation der Unebenheit und/oder des Hindernisses und/oder die Ermittlung der Position in Abhängigkeit der Höheninformationen erfolgt.

Erfindungsgemäß wird vorgeschlagen, ein erfasstes Lichtmuster zu berücksichtigen, um ein zukünftig zur Beleuchtung des Fahrzeugumfelds genutztes Beleuchtungsmuster zu wählen. Wie später noch genauer erläutert werden wird, kann anhand des zunächst erfassten Lichtmusters beispielsweise bereits erkannt werden, ob beziehungsweise wo sich relevante Unebenheiten beziehungsweise Hindernisse im Fahrzeugumfeld befinden können, zu denen beispielsweise automatisiert zusätzliche Informationen erkannt werden sollen. Anschließend kann das zweite Beleuchtungsmuster so gewählt werden, dass relevante Bereiche, beispielsweise Bereiche die scheinbar Unebenheiten beziehungsweise Hindernisse umfassen, auf eine Weise beleuchtet werden, die eine gute automatisierte Auswertung ermöglicht, beispielsweise mit einem feinstrukturierten Beleuchtungsmuster.

Für andere Bereiche kann beispielsweise ein relativ grob auflösendes Muster verwendet werden, das gut geeignet ist, großflächige Unebenheiten beziehungsweise Hindernisse für einen Fahrer hervorzuheben und zu verdeutlichen. Die Berücksichtigung des erfassten Lichtmusters zur Auswahl des zweiten Beleuchtungsmusters ermöglicht es somit, bereits Eigenschaften des Fahrzeugumfelds bei der Auswahl des zweiten Beleuchtungsmusters mit zu berücksichtigen und somit das zweite Beleuchtungsmuster so zu wählen, dass sowohl ein Fahrer als auch eine automatisierte Bildverarbeitung mit relevanten Informationen versorgt werden können.

Als Beleuchtungseinrichtung kann beispielsweise ein hochauflösendes Scheinwerfersystem des Kraftfahrzeugs, beispielsweise ein sogenanntes "Digital Matrix Light", verwendet werden. Das Beleuchtungsmuster kann durch einen Scheinwerfer oder durch mehrere Scheinwerfer gemeinsam projiziert werden. Hochauflösende Scheinwerfer können beispielsweise auf Basis von Leuchtdiodenmatrizen oder mithilfe einer schaltbaren Maske, beispielsweise einer Flüssigkristallmatrix, implementiert werden. In aktuellen Scheinwerfersystemen werden besonders hohe Ortsauflösungen durch Verwendung von Mikrospiegelarrays erreicht. Hierbei können innerhalb eines Scheinwerferkegels beziehungsweise eines ausgeleuchtetem Raumwinkelbereichs mehrere tausend oder sogar beispielsweise eine Million separat schaltbare Teilraumwinkelbereiche vorhanden sein.

Das Beleuchtungsmuster kann beispielsweise für jeden Teilraumwinkelbereich angeben, ob dort Licht abgestrahlt werden soll oder nicht. Somit können beispielsweise genau zwei verschiedene Beleuchtungsintensitäten möglich sein. Dies kann vorteilhaft sein, da eine Erkennung von Hindernissen beziehungsweise Unebenheiten mithilfe von verzerrten Lichtmustern besonders einfach möglich ist, wenn das Lichtmuster harte Kontraste aufweist. Es könnten jedoch auch Zwischenintensitäten genutzt werden, beispielsweise indem die Lichtintensität mit einer sehr hohen Frequenz jenseits des menschlichen Auflösungsvermögens beleuchtet wird und beispielsweise eine Pulsweite der Beleuchtung eingestellt wird. Hierdurch kann beispielsweise ein für einen Fahrer angenehmeres Lichtbild erzeugt werden.

Das erfindungsgemäße Verfahren kann nur in bestimmten Fahrsituationen beziehungsweise dann, wenn bestimmte Komponenten im Kraftfahrzeug verbaut sind, genutzt werden. Es kann beispielsweise nur dann verwendet werden, wenn ein hochauflösendes Scheinwerfersystem oder eine andere geeignete Beleuchtungseinrichtung und/oder eine geeignete Erfassungseinrichtung im Kraftfahrzeug verbaut sind. Es kann zudem beispielsweise nur dann genutzt werden, wenn ein Fahrer die Benutzung des Verfahrens frei gibt, beispielsweise ein Lichttastmodul auf "Automatik" stellt, eine Geschwindigkeit unterhalb eines vorgegebenen Geschwindigkeitsgrenzwertes liegt, das Fahrzeug fahrbereit ist, ein Offroad-Fahrprogramm aktiv ist, die befahrene Straße aufgrund von Navigationsdaten als "Offroad" klassifiziert wird beziehungsweise ein Assistenzsystem einen schlechten Straßenzustand signalisiert. Es ist möglich, dass alle genannten Bedingungen, nur eine der genannten Bedingungen oder eine nicht alle Bedingungen umfassende Untergruppe der genannten Bedingungen geprüft wird. Wie später noch erläutert werden wird, kann das erfindungsgemäße Verfahren unter anderem dazu dienen, Warnnachrichten an einen Fahrer auszugeben beziehungsweise ein adaptives Fahrwerk zu parametrisieren. Es ist daher möglich, das Verfahren nur dann durchzuführen, wenn Ausgabemittel für entsprechende Hinweise, beispielsweise ein Head-Display, beziehungsweise ein adaptives Fahrwerk verbaut ist beziehungsweise wenn eine automatisierte Parametrisierung des Fahrwerks beziehungsweise eine Anzeige entsprechender Warnungen aktiviert ist.

In Abhängigkeit des erfassten Lichtmusters wird erkannt, ob sich in dem Raumwinkelbereich eine Unebenheit und/oder ein Hindernis befindet und/oder wird einer erkannten Unebenheit und/oder einem erkannten Hindernis durch einen Klassifikationsalgorithmus eine Klasse zugewiesen und/oder wird eine Position der erkannten Unebenheit und/oder des erkannten Hindernisses ermittelt, wobei die Auswahl des zweiten Beleuchtungsmusters von der Klasse und/oder der Position und/oder davon abhängen kann, ob sich eine Unebenheit und/oder ein Hindernis in dem Raumwinkelbereich befindet.

In Abhängigkeit des ersten Beleuchtungsmusters und des erfassten Lichtmusters werden für Abschnitte einer in dem Raumwinkelbereich befindlichen Fahrebene jeweils Höheninformationen ermittelt, wobei die Erkennung und/oder Klassifikation der Unebenheit und/oder des Hindernisses und/oder die Ermittlung der Position in Abhängigkeit der Höheninformationen erfolgt. Es ist bekannt, das bei einer Projektion eines ebenen Lichtbündels auf ein zu vermessendes Objekt, also beispielsweise die Fahrebene, zwar aus Sicht der Beleuchtungseinrichtung eine exakt gerade Linie resultiert. Bei einer Erfassung dieser Linie durch eine zur Beleuchtungseinrichtung versetzte Erfassungseinrichtung resultiert jedoch eine deformierte Linie, deren Deformationen ein Maß für die Objekthöhe sind. Dieses Vorgehen ist als Lichtschnittverfahren im Stand der Technik an sich bekannt. Dieses Vorgehen kann auf beliebige Muster mit starken Hell-Dunkel-Übergängen übertragen werden, solange einzelne Hell-Dunkel-Übergänge im erfassten Lichtmuster eindeutig Hell-Dunkel-Übergänge im Beleuchtungsmuster zugeordnet werden können. Ist eine solche eindeutige Zuordnung nicht robust möglich, beispielsweise da aufgrund von zu starken Höhenunterschieden zu starke Verzerrungen des Musters resultieren, können Uneindeutigkeiten beispielsweise durch ein sequentielles Beleuchten mit unterschiedlichen Beleuchtungsmustern und Erfassen zugeordneter Lichtmuster aufgehoben werden. Dies wird auch als kodierter Lichtansatz bezeichnet.

Mithilfe der genannten oder ähnlicher Verfahren wird somit aus dem Lichtmuster ein Höhenverlauf der Fahrebene extrahiert. Hindernisse beziehungsweise Unebenheiten können dann beispielsweise erkannt werden, wenn eine Höhe eines Abschnitts oberhalb oder unterhalb eines Grenzwertes liegt beziehungsweise wenn sich innerhalb einer gewissen Länge der Fahrebene die ermittelte Höhe um einen Betrag ändert, der einen Grenzwert überschreitet.

Entsprechende Höhen beziehungsweise Höhenunterschiede können beispielsweise auch ausgewertet werden, um Unebenheiten beziehungsweise Hindernisse zu klassifizieren. Beispielsweise kann mit einer solchen Klassifikation ermittelt werden, ob ein Hindernis voraussichtlich ohne weiteres überfahren werden kann, ein Überfahren voraussichtlich nur unter gewissen Grenzbedingungen, also beispielsweise mit geringer Geschwindigkeit oder nach einer entsprechenden Einstellung des Fahrwerks, möglich ist, oder ein Überfahren generell vermieden werden sollte.

Als Position eines Hindernisses beziehungsweise einer Unebenheit kann beispielsweise die Mitte jenes Abschnitts gewählt werden, der am höchsten beziehungsweise am niedrigsten innerhalb des Hindernis- beziehungsweise Unebenheitsbereichs liegt oder Ähnliches.

Bei der Erkennung beziehungsweise Klassifizierung von Hindernissen genutzte Grenzwerte können von weiteren Parametern abhängen, beispielsweise von einem genutzten Fahrmodus, einer Fahrwerkseinstellung oder geometrischen Abmessungen des Kraftfahrzeugs.

Während die beschriebene Ermittlung von Höheninformationen eine sehr robuste Erkennung von Hindernissen beziehungsweise Unebenheiten beziehungsweise deren Klassifizierung und Positionserkennung ermöglicht, wäre es alternativ beispielsweise auch möglich, die Position, Klasse, beziehungsweise die Information, ob überhaupt eine Unebenheit beziehungsweise ein Hindernis vorliegt, ohne eine vorangehende Ermittlung von Höheninformationen durchzuführen. Beispielsweise kann unmittelbar ein Maß für eine lokale Verzerrung des erfassten Lichtmusters ermittelt werden, beispielsweise indem das erfasste Lichtmuster mit einem berechneten beziehungsweise vorab gespeicherten Ideallichtmuster verglichen wird, das bei einer Projektion des Beleuchtungsmusters auf einer ebenen Fahrebene resultieren würde.

In wenigstens einem ausgewählten Teilbereich des zweiten Beleuchtungsmusters kann die Beleuchtungsintensität in wenigstens eine Richtung häufiger wechseln als in dem gleichen ausgewählten Teilbereich des ersten Beleuchtungsmusters. Die Häufigkeit der Intensitätswechsel kann als Auflösung eines Lichtmusters betrachtet werden. Beispielsweise kann die Häufigkeit der Intensitätswechsel dadurch erhöht werden, dass bei einem Linienmuster die Linienzahl im ausgewählten Teilbereich für das zweite Beleuchtungsmuster höher ist als für das erste Beleuchtungsmuster. Bei einem Gittermuster kann beispielsweise die Gitterkonstante in wenigstens eine Richtung verkleinert werden, um zu einem häufigen Wechsel der Beleuchtungsintensität zu gelangen. Werden beispielsweise konzentrische Kreise als Muster projiziert, können lokal eine höhere Anzahl von Kreissegmenten in dem ausgewählten Teilbereich abgebildet werden. Insbesondere können das erste und zweite Beleuchtungsmuster zumindest lokal periodische Intensitätswechsel aufweisen. Ist dies der Fall, kann die Beleuchtungsintensität in dem ausgewählten Teilbereich im zweiten Beleuchtungsmuster eine höhere Ortsfrequenz aufweisen als in dem ersten Beleuchtungsmuster.

Die Erhöhung der Häufigkeit des Wechsels der Beleuchtungsintensität in dem Teilbereich kann insbesondere dann erfolgen, wenn anhand des Lichtmusters erkannt wird, dass sich in dem dem Teilbereich zugeordneten Raumwinkelbereich ein Hindernis beziehungsweise eine Unebenheit befindet. Ist dies nicht der Fall, kann das gleiche Beleuchtungsmuster insgesamt beziehungsweise für den jeweiligen Teilbereich weiter verwendet werden beziehungsweise es ist auch möglich, die Häufigkeit der Wechsel der Beleuchtungsintensität in einem Teilbereich zu reduzieren, für den keine Anwesenheit eines Hindernisses beziehungsweise einer Unebenheit erkannt wurde.

Der ausgewählte Teilbereich kann in Abhängigkeit der Position der erkannten Unebenheit und/oder des erkannten Hindernissees ausgewählt werden. Insbesondere kann das Beleuchtungsmuster somit in jenem Bereich dicht aufeinanderfolgende Wechsel der Beleuchtungsintensität in wenigstens eine Richtung aufweisen, in dem voraussichtlich eine Unebenheit beziehungsweise ein Hindernis beziehungsweise der diese beziehungsweise dieses umgebende Bereich ausgeleuchtet wird. Hierdurch kann die Position der Unebenheit beziehungsweise des Hindernisses mit hoher Genauigkeit erfasst werden beziehungsweise die automatische Erkennung und Klassifikation von Hindernissen beziehungsweise Unebenheiten kann verbessert werden.

Außerhalb des ausgewählten Bereichs kann die Beleuchtungsintensität weiterhin mit relativ geringer Häufigkeit wechseln, so dass insbesondere relativ großflächige beziehungsweise in ihrem Höhenverlauf langsam veränderliche Unebenheiten und Hindernisse für einen Fahrer gut erkennbar ausgeleuchtet werden.

Die Position der Unebenheit beziehungsweise des Hindernisses kann durch das bereits vorangehend erwähnte Lichtschnittverfahren beziehungsweise durch mit diesem verwandte Verfahren dreidimensional bezüglich des Kraftfahrzeugs bestimmt werden. So definieren Kanten im Beleuchtungsmuster jeweils eine Ebene, so dass eine Abbildung einer solchen Kante in einem bestimmten Bildpunkt des Lichtmusters, der wiederum einem bestimmten Raumwinkel bezüglich der Erfassungseinrichtung zugeordnet ist, eindeutig eine Position im dreidimensionalen Raum definiert, an der das abgestrahlte Licht gestreut beziehungsweise reflektiert wird. Es kann somit jener Teilbereich ausgewählt werden, um ihn mit einem höher aufgelösten Muster auszuleuchten, der den Teilwinkelbereich des Raumwinkelbereichs ausleuchtet, in dem sich die Unebenheit beziehungsweise das Hindernis befindet.

Das beschriebene Vorgehen kann auch iterativ wiederholt werden. Beispielsweise kann ein weiteres Lichtmuster erfasst werden, das aus der Beleuchtung des Fahrzeugumfelds mit dem zweiten Beleuchtungsmuster resultiert. Anhand dieses Lichtmusters kann beispielsweise die Position der Unebenheit beziehungsweise des Hindernisses mit höherer Genauigkeit ermittelt werden, wenn ein zweites Beleuchtungsmuster verwendet wird, bei dem im relevanten Bereich die Beleuchtungsintensität mit größerer Häufigkeit wechselt als im ersten Beleuchtungsmuster. Anhand dieser genaueren Position kann erneut ein Teilbereich des zweiten Beleuchtungsmusters ausgewählt werden und ein drittes Beleuchtungsmuster kann dann so gewählt werden, dass in diesem weiteren ausgewählten Teilbereich die Beleuchtungsintensität häufiger wechselt als in dem zweiten Beleuchtungsmuster und so weiter.

Durch die Erfassungseinrichtung kann das weitere oder ein weiteres Lichtmuster erfasst werden, das aus der Beleuchtung des Fahrzeugumfeldes mit dem zweiten Beleuchtungsmuster resultiert, wobei in Abhängigkeit des weiteren Lichtmusters wenigstens ein Parameter eines Fahrwerks des Kraftfahrzeugs eingestellt und/oder eine Hinweisinformation an einen Fahrer des Kraftfahrzeugs ausgegeben wird.

Beispielsweise kann vor dem Überfahren eines Hindernisses beziehungsweise einer Unebenheit eine Bodenfreiheit durch Verstellen des Fahrwerks erhöht werden oder es können beispielsweise einzelne Federn härter oder weicher gestellt werden, um ein beschädigungsfreies Überfahren der Unebenheit beziehungsweise des Hindernisses zu ermöglichen.

Während die obig erläuterte Nutzung von dichteren Leuchtmustern im Bereich von Hindernissen beziehungsweise Unebenheiten bereits ausreichen kann, um einen Fahrer auf entsprechende Bereiche hinzuweisen, kann es auch vorteilhaft sein, zusätzlich eine Hinweisinformation auszugeben. Dies kann im einfachsten Fall durch eine akustische Warnmeldung oder beispielsweise eine optische Anzeige in einem Kombiinstrument oder Mittendisplay erfolgen. Eine optische Warnung kann beispielsweise auch über ein Head-up-Display des Kraftfahrzeugs, beispielsweise durch ein entsprechendes Symbol, eingeblendet werden. Besonders bevorzugt wird das Hindernis beziehungsweise die Unebenheit jedoch mithilfe eines kontaktanalogen Head-up-Displays hervorgehoben, so dass ein entsprechender Warnhinweis, ein Warnsymbol oder Ähnliches im Head-up-Display derart dargestellt wird, dass seine Darstellung aus dem Blickwinkel des Fahrers mit dem Hindernis beziehungsweise mit der Unebenheit überlappt. Ansätze zur Realisierung von kontaktanalogen Head-up-Displays sind im Stand der Technik bekannt und sollen daher nicht detailliert erläutert werden.

Das erste und/oder zweite Beleuchtungsmuster können derart gewählt sein, dass bei Abstrahlung des ersten und/oder zweiten Beleuchtungsmusters durch die Beleuchtungseinrichtung in Bereichen, in denen ein ebener Untergrund beleuchtet wird, ein Streifenmuster oder ein Gittermuster oder konzentrische Kreise als Lichtmuster resultieren. Bei der Nutzung von solchen relativ regelmäßigen Strukturen als Beleuchtungsmuster ist es beispielsweise für einen Fahrer besonders einfach, eine Veränderung des Musters aufgrund von Unebenheiten oder Hindernissen zu erkennen. Es können auch kodierte Lichtbilder, definierte Punktemuster oder Ähnliches genutzt werden, um Hindernisse beziehungsweise Unebenheiten im Fahrzeugumfeld anhand einer Veränderung eines projizierten Lichtmusters zu erkennen.

Die Beleuchtungseinrichtung ist vorzugsweise ein Scheinwerfer des Kraftfahrzeugs oder umfasst wenigstens einen Scheinwerfer des Kraftfahrzeugs. Beispielsweise können Scheinwerfer genutzt werden, die hochaufgelöste Lichtbilder ins Fahrzeugumfeld abstrahlen können. Ein Beispiel hierfür ist in das sogenannte "Digital Matrix Light", das ein Mikrospiegelarray zur Darstellung von Lichtmustern nutzt. Die Beleuchtungseinrichtung kann insbesondere Licht im sichtbaren Spektralbereich, beispielsweise in einem Bereich zwischen 380 nm und 780 nm, abstrahlen.

Neben dem erfindungsgemäßen Verfahren betrifft die Erfindung ein Kraftfahrzeug mit einer Beleuchtungseinrichtung, einer Erfassungseinrichtung und einer Steuereinrichtung, wobei die Steuereinrichtung dazu eingerichtet ist, die Beleuchtungseinrichtung gemäß dem erfindungsgemäßen Verfahren anzusteuern. Die Steuereinrichtung ist vorzugsweise auch dazu eingerichtet, weitere Komponenten des Kraftfahrzeugs, die vorangehend mit Bezug auf das erfindungsgemäße Verfahren diskutiert wurden, gemäß dem erfindungsgemäßen Verfahren anzusteuern. Allgemein lassen sich zum erfindungsgemäßen Verfahren erläuterte Merkmale mit den genannten Vorteilen auf das erfindungsgemäße Kraftfahrzeug übertragen und umgekehrt.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ablaufdiagramm eines Ausführungsbeispiels des erfindungsgemäßen Verfahrens,
- Figuren 2 und 4: in dem Verfahren genutzte erste und zweite Beleuchtungsmuster,
- Figuren 3 und 5: Lichtmuster, die in dem Verfahren aus einer Projektion der in Fig. 2 und 4 gezeigten Beleuchtungsmuster durch ein Ausführungsbeispiel des erfindungsgemäßen Kraftfahrzeugs resultieren, und
- Figuren 6 und 7: erste und zweite Beleuchtungsmuster in einem weiteren Ausführungsbeispiel des erfindungsgemäßen Verfahrens.

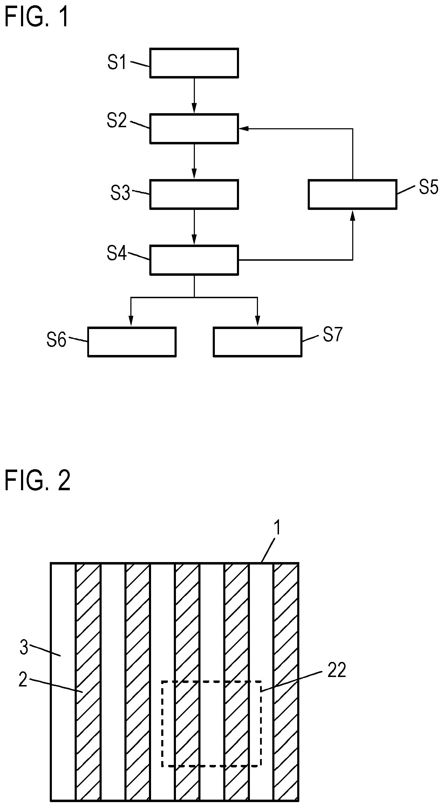

Fig. 1 zeigt ein Ablaufdiagramm eines Verfahrens zur Beleuchtung eines Fahrzeugumfelds eines Kraftfahrzeugs, wobei die Beleuchtung dazu dienen soll, Unebenheiten beziehungsweise Hindernisse im Fahrzeugumfeld für einen Fahrer sichtbar hervorzuheben und eine automatische Erkennung von Hindernissen beziehungsweise Unebenheiten durch fahrzeugseitige Einrichtungen zu verbessern. In Schritt S1 wird hierzu zunächst geprüft, ob eine Vorbedingung erfüllt ist und ob somit überhaupt eine Beleuchtung des Fahrzeugumfelds mit bestimmten Mustern erfolgen soll, um Hindernisse beziehungsweise Unebenheiten hervorzuheben. Dies soll insbesondere bei einem Offroad-Betrieb des Kraftfahrzeugs erfolgen. Somit kann beispielsweise überprüft werden, ob ein Fahrprogramm für Offroad-Fahrten aktiv ist und/oder Navigationsdaten eine momentan gefahrene Strecke als Offroad-Abschnitt klassifizieren und/oder ein Assistenzsystem einen schlechten Straßenzustand indiziert. Zudem kann geprüft werden, ob ein Benutzer einen entsprechenden Beleuchtungsmodus freigegeben hat, beispielsweise ob ein Lichttastmodul auf einen Automatikbetrieb geschaltet ist. Im Rahmen der Freigabebedingung kann beispielsweise auch geprüft werden, ob relevante Komponenten für ein solches Verfahren überhaupt im Fahrzeug vorhanden sind, beispielsweise ob ein hochauflösendes Scheinwerfersystem verbaut ist, eine geeignete Erfassungseinrichtung vorhanden ist, Anzeigemittel zur Ausgabe von Hinweisen an einen Fahrer vorhanden sind, ein adaptives Fahrwerk verbaut ist oder Ähnliches.

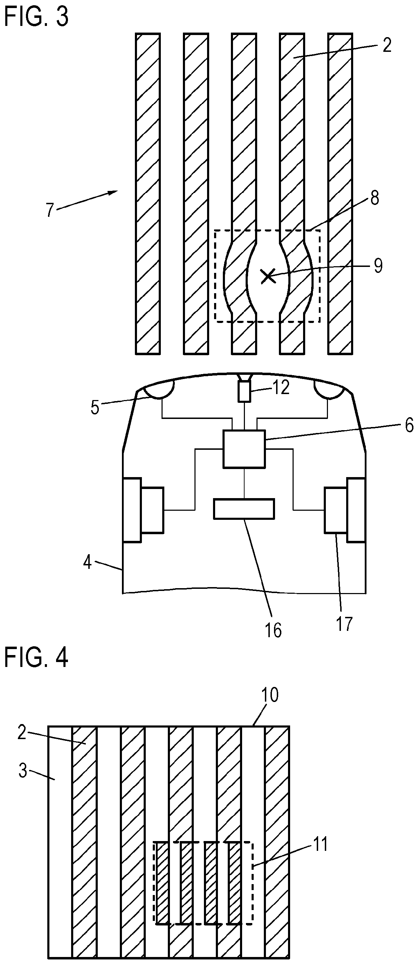

Wurde in Schritt S1 ermittelt, dass die Beleuchtung des Fahrzeugumfelds zur Hervorhebung von Unebenheiten beziehungsweise Hindernissen erfolgen soll, wird in Schritt S2 ein erstes Beleuchtungsmuster 1, das in Fig. 1 schematisch dargestellt ist, durch eine Beleuchtungseinrichtung 5, beispielsweise einen hochauflösenden Scheinwerfer, des Kraftfahrzeugs 4, das in Fig. 3 schematisch dargestellt ist, abgestrahlt. Die Auswahl beziehungsweise Vorgabe des Beleuchtungsmusters 1 erfolgt durch die Steuereinrichtung 6. Als Beleuchtungsmuster 1 wird beispielhaft ein einfaches Streifenmuster genutzt, bei dem sich hell ausgeleuchtete Streifen beziehungsweise Teilraumwinkelbereiche 2 mit im Wesentlichen nicht ausgeleuchteten Streifen beziehungsweise Teilraumwinkelbereiche 3 abwechseln.

Wird das Beleuchtungsmuster 1 auf einen Untergrund projiziert, der an der Position 9 ein Hindernis aufweist, resultiert, wie in Fig. 3 schematisch dargestellt ist, ein Lichtmuster 7, bei dem die Lichtstreifen beziehungsweise die Kontrastsprünge zwischen den unterschiedlich ausgeleuchteten Teilraumwinkelbereichen 2, 3 im Bereich des Hindernisses verzerrt sind. Hierdurch kann ein Fahrer des Kraftfahrzeugs 1 entsprechende Bereiche leicht anhand der Verzerrung des Lichtmusters 7 erkennen.

In Schritt S3 wird das Lichtmuster 7 durch eine Erfassungseinrichtung 12 des Kraftfahrzeugs, beispielsweise eine Kamera, erfasst. Die erfassten Bilddaten werden in Schritt S4 durch die Steuereinrichtung 6 verarbeitet, um relevante Hindernisse beziehungsweise Unebenheiten im Bereich des Lichtmusters 7 zu erkennen. Dies ist beispielsweise möglich, indem anhand der Verzerrungen der Lichtstreifen ein Höhenprofil für Abschnitte 8 einer Fahrebene ermittelt wird, wie bereits vorangehend erläutert wurde. Als Hindernisse beziehungsweise Unebenheiten können anschließend Änderungen dieses Höhenprofils jenseits eines Grenzwerts erkannt werden. Alternativ könnten Unebenheiten beziehungsweise Hindernisse auch erkannt werden, indem eine Abweichung des erfassten Lichtmusters 7 von einem vorgegebenen erwarteten Lichtmuster erkannt wird. Insbesondere wird in Schritt S4 die Position 9 der Unebenheit beziehungsweise des Hindernisses ermittelt. Optional kann eine Unebenheit beziehungsweise ein Hindernis auch klassifiziert werden, beispielsweise um zwischen überfahrbaren, nur unter bestimmten Bedingungen überfahrbaren und nicht überfahrbaren Hindernissen beziehungsweise Unebenheiten zu unterscheiden.

Da zunächst ein relativ grobes Streifenmuster als Beleuchtungsmuster 1 genutzt wird, ist die Erkennung von Unebenheiten beziehungsweise Hindernissen und insbesondere eine Bestimmung einer Position beziehungsweise Klasse der Unebenheit beziehungsweise des Hindernisses zunächst relativ ungenau. Daher wird in Schritt S5 in Abhängigkeit des erfassten Lichtmusters 7 und insbesondere in Abhängigkeit der mithilfe von diesem ermittelte Position 9 ein zweites Beleuchtungsmuster 10 gewählt, das in Fig. 4 dargestellt ist. Das zweite Beleuchtungsmuster 10 unterscheidet sich dadurch von dem ersten Beleuchtungsmuster 1, dass die Beleuchtungsintensität in einem ausgewählten Teilbereich 11 des zweiten Beleuchtungsmusters 10 in Querrichtung der Fig. 4 häufiger wechselt als in dem gleichen ausgewählten Teilbereich 22 des ersten Beleuchtungsmusters 1. Der Teilbereich 11, 22 ist hierbei so ausgewählt, dass er den die Position 9 umgebenden Abschnitt 8, 14 des Fahrzeugumfeldes und somit den Gegenstand beziehungsweise die Unebenheit ausleuchtet. Die häufige wechselnde Beleuchtungsintensität wird dadurch realisiert, dass in dem Teilbereich 11 ein engeres Streifenmuster verwendet wird. Im Beispiel variiert somit die Beleuchtungsintensität in dem Teilbereich 11 mit der doppelten Frequenz gegenüber dem Teilbereich 22. Hierdurch wird in Querrichtung eine erheblich verbesserte Auflösung der Abtastung des Umfelds erreicht.

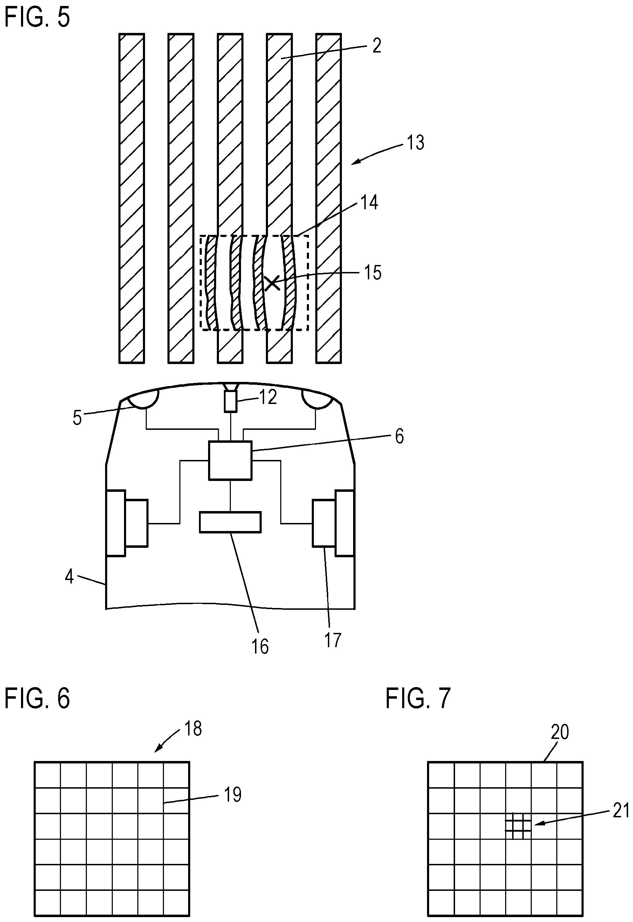

Das Verfahren wird anschließend ab Schritt S2 wiederholt, wobei statt dem ersten Beleuchtungsmuster 1 das zweite Beleuchtungsmuster 10 abgestrahlt wird, womit, wie schematisch in Fig. 5 dargestellt ist, auch ein anderes Lichtmuster 13 resultiert. Anhand dieses Lichtmusters 13 kann nun beispielsweise erneut ein Höhenprofil des Umfelds des Kraftfahrzeugs 1 ermittelt werden, wobei im Abschnitt 14 aufgrund des engeren Streifenmusters eine deutlich bessere Ortsauflösung erreicht werden kann. Dies kann beispielsweise dazu führen, dass für das Hindernis beziehungsweise die Unebenheit nun eine veränderte Position 15 ermittelt wird.

Die Veränderung des Beleuchtungsmusters und insbesondere die Ausleuchtung der Umgebung einer relevanten Position 9, 15 mit zunehmend höher auflösenden Mustern kann mehrfach wiederholt werden, beispielsweise für eine bestimmte Anzahl von Durchgängen, bis eine Auflösungsgrenze der Beleuchtungseinrichtung 5 beziehungsweise der Erfassungseinrichtung 12 erreicht ist oder bis ein bestimmtes Konvergenzkriterium erfüllt ist, beispielsweise bis die Position 9, 15 sich durch eine weitere Änderung des Beleuchtungsmusters sich im Wesentlichen nicht mehr ändert.

Durch das Abstrahlen der Beleuchtungsmuster 1, 10 und das somit im Vorfeld des Kraftfahrzeugs sichtbare Lichtmuster 7, 13 ist es einerseits für einen Fahrer leicht möglich, die Beschaffenheit der Oberfläche gut einzuschätzen und insbesondere Hindernisse und Unebenheiten gut zu erkennen. Andererseits kann eine automatisierte Erkennung von Hindernissen und Unebenheiten verbessert werden. Dies kann beispielsweise dazu genutzt werden, einen Fahrer auf besonders relevante Unebenheiten beziehungsweise Hindernisse, beispielsweise Unebenheiten beziehungsweise Hindernisse, die nicht oder nur mit geringer Geschwindigkeit überfahren werden sollten, hinzuweisen. Ein entsprechender Hinweis kann in Schritt S6 ausgegeben werden. Hierzu kann die Steuereinrichtung 6 des Kraftfahrzeugs 4 eine Hinweiseinrichtung 16, beispielsweise ein Head-up-Display oder eine Mittelkonsolenanzeige, ansteuern. Bei Nutzung eines Head-up-Displays kann die Anzeige insbesondere kontaktanalog erfolgen, was dadurch ermöglicht wird, dass die Position 9, 15 der Unebenheit beziehungsweise des Hindernisses mit hoher Genauigkeit erkannt werden kann.

Ergänzend oder alternativ kann es zweckmäßig sein, wenigstens einen Parameter eines Fahrwerks 17 durch die Steuereinrichtung 6 in Abhängigkeit des jeweiligen erfassten Lichtmusters 7, 13 anzupassen. Beispielsweise kann eine Höhe oder eine Klasse einer Unebenheit oder eines Hindernisses darauf hinweisen, dass die Unebenheit beziehungsweise das Hindernis nur mit einer erhöhten Bodenfreiheit überfahren werden sollte. Entsprechend kann das Fahrwerk 17 des Kraftfahrzeugs 4 vor Erreichen des Hindernisses parametrisiert werden, um beispielsweise ein Aufsetzen zu vermeiden.

In den bisherigen Ausführungsbeispielen wurde davon ausgegangen, dass das Beleuchtungsmuster 1, 10 ein Streifenmuster ist. Es können jedoch auch andere Beleuchtungsmuster genutzt werden. Dies wird im Folgenden rein beispielhaft anhand eines gitterförmigen ersten Beleuchtungsmusters 18 erläutert, das in Fig. 6 dargestellt ist. Aus Übersichtlichkeitsgründen sind die hell ausgeleuchteten Teilwinkelbereiche 19 in Fig. 6 nur als einzelne Striche dargestellt. Die Breite dieser hell ausgeleuchtete Teilraumwinkelbereich 19 kann bedarfsgerecht gewählt werden. Wird nun durch die bereits vorangehend erläuterte Auswertung des resultierenden Lichtmusters erkannt, dass sich in einem bestimmten Abschnitt des Lichtmusters ein weiter zu untersuchendes Hindernis beziehungsweise eine weiter zu untersuchende Unebenheit befindet, kann, wie in Fig. 7 dargestellt ist, ein zweites Beleuchtungsmuster 20 gewählt werden, indem in einem ausgewählten Teilbereich 21 zusätzliche Gitterlinien beziehungsweise hell ausgeleuchtete Teilraumwinkelbereiche 19 ergänzt werden und, falls erforderlich, die Linienbreite dieser Gitterlinien verringert wird, womit im ausgewählten Teilbereich 21 wiederum die Beleuchtungsintensität häufiger wechselt als in dem gleichen Teilbereich des ersten Beleuchtungsmusters 18.

## Patentansprüche

1. Verfahren zur Beleuchtung eines Fahrzeugumfeldes eines Kraftfahrzeugs (4), das eine Beleuchtungseinrichtung (5) und eine Erfassungseinrichtung (12) umfasst, wobei die Beleuchtungseinrichtung (5) dazu eingerichtet ist, einen Raumwinkelbereich des Fahrzeugumfelds mit verschiedenen Beleuchtungsmustern (1, 10, 18, 20), insbesondere mit sichtbarem Licht, zumindest teilweise auszuleuchten, wobei die Beleuchtungsmuster (1, 10, 18, 20) jeweils Beleuchtungsintensitäten für verschiedene Teilraumwinkelbereiche (2, 3, 19) des Raumwinkelbereichs vorgeben, umfassend die Schritte:
- Beleuchten des Fahrzeugumfelds mit einem ersten der Beleuchtungsmuster (1, 18) durch die Beleuchtungseinrichtung (5),
- Erfassen eines Lichtmusters (7), das aus der Beleuchtung des Fahrzeugumfeldes mit dem ersten Beleuchtungsmuster (1, 18) resultiert, durch die Erfassungseinrichtung (12),
- Auswahl eines zweiten der Beleuchtungsmuster (10, 20) in Abhängigkeit des erfassten Lichtmusters (7), und
- Beleuchten des Fahrzeugumfeldes mit dem zweiten Beleuchtungsmuster (10, 20) durch die Beleuchtungseinrichtung (5),
wobei in Abhängigkeit des erfassten Lichtmusters (7)
- erkannt wird, ob sich in dem Raumwinkelbereich eine Unebenheit und/oder ein Hindernis befindet und/oder
- einer erkannten Unebenheit und/oder einem erkannten Hindernis durch eine Klassifikationsalgorithmus eine Klasse zugewiesen wird und/oder
- eine Position (9, 15) der erkannten Unebenheit und/oder des erkannten Hindernisses ermittelt wird,
wobei die Auswahl des zweiten Beleuchtungsmusters (10, 20) von der Klasse und/oder der Position (9, 15) und/oder davon abhängt, ob sich eine Unebenheit und/oder ein Hindernis in dem Raumwinkelbereich befindet,
**dadurch gekennzeichnet,**
**dass** in Abhängigkeit des ersten Beleuchtungsmusters (1, 18) und des erfassten Lichtmusters (7, 13) für Abschnitte (8, 14) einer in dem Raumwinkelbereich befindlichen Fahrebene jeweils Höheninformationen ermittelt werden, und somit aus dem erfassten Lichtmuster (7, 13) einen Höhenverlauf der Fahrebene extrahiert wird, wobei die Erkennung und/oder Klassifikation der Unebenheit und/oder des Hindernisses und/oder die Ermittlung der Position (9, 15) in Abhängigkeit der Höheninformationen erfolgt.

2. Verfahren nach einem der vorangehenden Ansprüche,
**dadurch gekennzeichnet,**
**dass** in wenigstens einem ausgewählten Teilbereich (11, 21) des zweiten Beleuchtungsmusters (10, 20) die Beleuchtungsintensität in wenigstens eine Richtung häufiger wechselt als in dem gleichen ausgewählten Teilbereich (22) des ersten Beleuchtungsmusters (1, 18).

3. Verfahren nach Anspruch 2,
**dadurch gekennzeichnet,**
**dass** der ausgewählte Teilbereich (11, 21) in Abhängigkeit der Position (9, 15) der erkannten Unebenheit und/oder des erkannten Hindernisses ausgewählt wird.

4. Verfahren nach einem der vorangehenden Ansprüche,
**dadurch gekennzeichnet,**
**dass** durch die Erfassungseinrichtung (12) ein weiteres Lichtmuster (13) erfasst wird, das aus der Beleuchtung des Fahrzeugumfeldes mit dem zweiten Beleuchtungsmuster (10, 20) resultiert, wobei in Abhängigkeit des weiteren Lichtmusters (13) wenigstens ein Parameter eines Fahrwerks (17) des Kraftfahrzeugs (4) eingestellt und/oder eine Hinweisinformation an einen Fahrer des Kraftfahrzeugs (1) ausgegeben wird.

5. Verfahren nach einem der vorangehenden Ansprüche,
**dadurch gekennzeichnet,**
**dass** das erste und/oder zweite Beleuchtungsmuster (1, 10, 18, 20) derart gewählt sind, dass bei Abstrahlung des ersten und/oder zweiten Beleuchtungsmusters (1, 10, 18, 20) durch die Beleuchtungseinrichtung (5) in Bereichen, in denen ein ebener Untergrund beleuchtet wird, ein Streifenmuster oder ein Gittermuster oder konzentrische Kreise als Lichtmuster (7, 13) resultiert.

6. Verfahren nach einem der vorangehenden Ansprüche,
**dadurch gekennzeichnet,**
**dass** die Beleuchtungseinrichtung (5) ein Scheinwerfer des Kraftfahrzeugs (1) ist oder wenigstens einen Scheinwerfer umfasst.

7. Kraftfahrzeug mit einer Beleuchtungseinrichtung (5), einer Erfassungseinrichtung (12) und einer Steuereinrichtung (6), **dadurch gekennzeichnet, dass** die Steuereinrichtung (6) dazu eingerichtet ist, die Beleuchtungseinrichtung (5) gemäß dem Verfahren nach einem der vorangehenden Ansprüche anzusteuern.

## Claims

1. Method for illuminating a vehicle environment of a motor vehicle (4) comprising an illumination device (5) and a detection device (12), wherein the illumination device (5) is configured to at least partly illuminate a solid angle region of the vehicle environment with different illumination patterns (1, 10, 18, 20), in particular with visible light, wherein the illumination patterns (1, 10, 18, 20) each predefine illumination intensities for different solid angle subregions (2, 3, 19) of the solid angle region, comprising the following steps:
- illuminating the vehicle environment with a first of the illumination patterns (1, 18) by means of the illumination device (5),
- detecting, by means of the detection device (12), a light pattern (7) resulting from the illumination of the vehicle environment with the first illumination pattern (1, 18),
- selecting a second of the illumination patterns (10, 20) depending on the detected light pattern (7), and
- illuminating the vehicle environment with the second illumination pattern (10, 20) by means of the illumination device (5),
wherein depending on the detected light pattern (7)
- it is recognized whether there is an unevenness and/or an obstacle in the solid angle region and/or
- a class is allocated to a recognized unevenness and/or a recognized obstacle by means of a classification algorithm and/or
- a position (9, 15) of the recognized unevenness and/or of the recognized obstacle is determined,
wherein the selection of the second illumination pattern (10, 20) depends on the class and/or the position (9, 15) and/or on whether there is an unevenness and/or an obstacle in the solid angle region,
**characterized**
**in that** height information is in each case determined depending on the first illumination pattern (1, 18) and the detected light pattern (7, 13) for sections (8, 14) of a driving plane located in the solid angle region, and a height profile of the driving plane is thus extracted from the detected light pattern (7, 13), the recognition and/or classification of the unevenness and/or of the obstacle and/or the determination of the position (9, 15) being effected depending on the height information.

2. Method according to any of the preceding claims,
**characterized**
**in that** in at least one selected subregion (11, 21) of the second illumination pattern (10, 20) the illumination intensity in at least one direction changes more frequently than in the same selected subregion (22) of the first illumination pattern (1, 18) .

3. Method according to Claim 2,
**characterized**
**in that** the selected subregion (11, 21) is selected depending on the position (9, 15) of the recognized unevenness and/or of the recognized obstacle.

4. Method according to any of the preceding claims,
**characterized**
**in that** the detection device (12) detects a further light pattern (13) resulting from the illumination of the vehicle environment with the second illumination pattern (10, 20), wherein depending on the further light pattern (13) at least one parameter of a chassis (17) of the motor vehicle (4) is set and/or a device information is output to a driver of the motor vehicle (1).

5. Method according to any of the preceding claims,
**characterized**
**in that** the first and/or second illumination pattern (1, 10, 18, 20) are/is chosen in such a way that upon emission of the first and/or second illumination pattern (1, 10, 18, 20) by the illumination device (5) in regions in which a planar base surface is illuminated, a striated pattern or a grid pattern or concentric circles result(s) as light pattern (7, 13).

6. Method according to any of the preceding claims,
**characterized**
**in that** the illumination device (5) is a headlight of the motor vehicle (1) or comprises at least one headlight.

7. Motor vehicle comprising an illumination device (5), a detection device (12) and a control device (6), **characterized in that** the control device (6) is configured to control the illumination device (5) in accordance with the method according to any of the preceding claims.

## Revendications

1. Procédé permettant d'éclairer un environnement de véhicule d'un véhicule automobile (4) qui comprend un dispositif d'éclairage (5) et un dispositif de détection (12), dans lequel le dispositif d'éclairage (5) est agencé pour éclairer au moins partiellement une région à angle solide de l'environnement de véhicule avec différents motifs d'éclairage (1, 10, 18, 20), en particulier avec une lumière visible, dans lequel les motifs d'éclairage (1, 10, 18, 20) spécifient respectivement des intensités d'éclairage pour différentes régions partielles à angle solide (2, 3, 19) de la région à angle solide, comprenant les étapes consistant à :
- éclairer l'environnement de véhicule avec un premier motif d'éclairage (1, 18) par le dispositif d'éclairage (5),
- détecter un motif lumineux (7) qui résulte de l'éclairage de l'environnement de véhicule avec le premier motif d'éclairage (1, 18) par le dispositif de détection (12),
- sélectionner un deuxième des motifs d'éclairage (10, 20) en fonction du motif lumineux détecté (7), et
- éclairer l'environnement de véhicule avec le deuxième motif d'éclairage (10, 20) par le dispositif d'éclairage (5),
dans lequel, en fonction du motif lumineux détecté (7),
- il est identifié si une irrégularité et/ou un obstacle se trouve(nt) dans la région à angle solide, et/ou
- une classe est attribuée à une irrégularité identifiée et/ou à un obstacle identifié, par un algorithme de classification, et/ ou
- une position (9, 15) de l'irrégularité identifiée et/ou de l'obstacle identifié est établie,
dans lequel la sélection du deuxième motif d'éclairage (10, 20) dépend de la classe et/ou de la position (9, 15) et/ou dépend du fait qu'une irrégularité et/ou un obstacle se trouve(nt) dans la région à angle solide,
**caractérisé en ce qu'**en fonction du premier motif d'éclairage (1, 18) et du motif lumineux détecté (7, 13), respectivement des informations d'altitude sont déterminées pour des parties (8, 14) d'un plan de conduite se trouvant dans la région à angle solide, et de ce fait une courbe d'altitude du plan de conduite est extraite du motif lumineux détecté (7, 13), dans lequel l'identification et/ou la classification de l'irrégularité et/ou de l'obstacle et/ou la détermination de la position (9, 15) sont effectués en fonction des informations d'altitude.

2. Procédé selon l'une quelconque des revendications précédentes, **caractérisé en ce que** dans au moins une zone partielle sélectionnée (11, 21) du deuxième motif d'éclairage (10, 20) l'intensité d'éclairage change dans au moins une direction plus souvent que dans la même zone partielle sélectionnée (22) du premier motif d'éclairage (1, 18).

3. Procédé selon la revendication 2, **caractérisé en ce que** la zone partielle sélectionnée (11, 21) est sélectionnée en fonction de la position (9, 15) de l'irrégularité identifiée et/ou de l'obstacle identifié.

4. Procédé selon l'une quelconque des revendications précédentes, **caractérisé en ce que** le dispositif de détection (12) détecte un autre motif lumineux (13) qui résulte de l'éclairage de l'environnement de véhicule avec le deuxième motif d'éclairage (10, 20), dans lequel, en fonction de l'autre motif lumineux (13), au moins un paramètre d'un châssis (17) du véhicule automobile (4) est réglé et/ou une information est fournie à un conducteur du véhicule automobile (1).

5. Procédé selon l'une quelconque des revendications précédentes, **caractérisé en ce que** le premier et/ou le deuxième motif d'éclairage (1, 10, 18, 20) sont sélectionnés de telle sorte que lors de l'émission du premier et/ou due deuxième motif d'éclairage (1, 10, 18, 20) par le dispositif d'éclairage (5) dans des zones dans lesquelles un terrain plan est éclairé, un motif à bandes ou un motif de grille ou des cercles concentriques résulte(nt) comme le motif lumineux (7, 13) .

6. Procédé selon l'une quelconque des revendications précédentes, **caractérisé en ce que** le dispositif d'éclairage (5) est un phare du véhicule automobile (1) ou comprend au moins un phare.

7. Véhicule automobile, comprenant un dispositif d'éclairage (5), un dispositif de détection (12) et un dispositif de commande (6), **caractérisé en ce que** le dispositif de commande (6) est aménagé pour piloter le dispositif d'éclairage (5) selon le procédé selon l'une quelconque des revendications précédentes.
